# EUROPÄISCHE PATENTSCHRIFT

(11) **EP 2 157 853 B1**
(45) Veröffentlichungstag und Bekanntmachung des Hinweises auf die Patenterteilung: **02.08.2017**
(21) Anmeldenummer: 08759075.8
(22) Anmeldetag: 06.06.2008
(51) Int. Cl.: A01N 25/26, A01N 25/28, A01N 59/16

(54) **NANOKOMPLEXE MIT DENDRITISCHER STRUKTUR ZUR EINLAGERUNG UND/ODER ZUM TRANSPORT VON MONOVALENTEN METALLIONEN**
NANOCOMPLEXES HAVING A DENDRITIC STRUCTURE FOR INCORPORATING AND/OR TRANSPORTING MONOVALENT METAL IONS
NANOCOMPLEXES A STRUCTURE DENDRITIQUE POUR L'INSERTION ET/OU LE TRANSPORT D'IONS METALLIQUES MONOVALENTS

(30) Priorität: 06.06.2007 DE 102007026397
(43) Veröffentlichungstag der Anmeldung: 03.03.2010
(73) Patentinhaber: FU Berlin, 14195 Berlin (DE)
(72) Erfinder: LANDAU, Uwe, 14169 Berlin (DE); HAAG, Rainer, 12209 Berlin (DE); KRÄMER, Michael, 77656 Offenburg (DE); RADOWSKI, Michal, 81-867 Sopot (PL)
(74) Vertreter: Maikowski & Ninnemann Patentanwälte Partnerschaft mbB
(86) Internationale Anmeldenummer: PCT/EP2008/004537
(87) Internationale Veröffentlichungsnummer: WO 2008/148568

(56) Entgegenhaltungen:
- EP-A- 0 928 813
- RADOWSKI M R ET AL: "Supramolekulare Aggregate auf Basis dendritischer Multischalenarchitekturen als universelle Nanotransporter" ANGEWANDTE CHEMIE. INTERNATIONAL EDITION, WILEY VCH VERLAG, WEINHEIM, Bd. 119, Nr. 8, 12. Februar 2007 (2007-02-12), Seiten 1287-1292, XP002441582 ISSN: 1433-7851
- KRÄMER M ET AL: "Water-soluble dendritic architectures with carbohydrate shells for the templation and stabilization of catalytically active metal nanoparticles" MACROMOLECULES, ACS, WASHINGTON, DC, US, Bd. 38, 1. Januar 2005 (2005-01-01), Seiten 8308-8315, XP002441581 ISSN: 0024-9297 in der Anmeldung erwähnt

## Beschreibung

Die vorliegende Erfindung betrifft die Verwendung eines Nanopartikels (Nanotransporters) mit einer Kern-Schale-Struktur (KS) oder einer Doppelkern-Schale-Struktur (DKS) zur nicht-kovalenten Einlagerung und/oder zum Transport von Ag(I)-Ionen bzw. von Gemischen von Ag(I)-Ionen mit höhervalenten Metallionen, wobei das Nanopartikel einen dendritischen Kern und mindestens eine Schale umfasst. Mit den erfindungsgemäßen Nanopartikeln mit eingelagerten Ionen kann bereits bei sehr geringen Konzentrationen eine äußerst hohe mikrobiozide Wirkung erzielt werden. Deshalb betrifft die vorliegende Erfindung auch die Verwendung dieser Nanopartikel als mikrobiozide bzw. bakterizide Verbindung.

Das Abtöten von Bakterien stellt eine große Herausforderung in sterilen Anwendungen dar, z. B. in der Medizin, wo Keime effizient und schnell entfernt werden müssen. Bakterizide Wirkungen können auf Silbernanopartikeln (Aymonier et al., Chem. Commun. 2002, 3018-3019; Haag et al., Polymer Preprints 2002, 43, 328) oder auf entsprechend funktionalisierten Dendrimeren basieren, wie von einem in der Literatur berichteten PPI Dendrimer mit kationischen Dimethyldodecylammoniumgruppen an der Peripherie (Chen et al., Adv. Mater. 2000, 12, 843-846). Silbernanopartikel wurden in der Vergangenheit von mehreren Arbeitsgruppen intensiv erforscht (Aymonier et al., Chem. Commun. 2002, 3018-3019; Krämer et al., Macromolecules 2005, 38, 8303-8315; Garcia-Bernabe et al., Chem. Eur J. 2004, 10, 2822-2830; Krämer et al., Angew. Chem. 2002, 114, Nr. 22, 4426-4431).

Ag°-Nanopartikel sind derzeit die effektivste Formulierung für eine mikrobiozide Wirkung. Durch die große Silber-Oberfläche wird eine hohe Ag⁺-Ionenabgabe erreicht, die nach landläufiger Auffassung für die mikrobiozide Wirkung notwendig ist. Gleichzeitig weisen die Ag-Nanopartikel eine hohe Depotwirkung auf. Allerdings haben diese Ag-Nanopartikel den Nachteil, dass die zur Erzielung einer mikrobioziden Wirkung benötigten Konzentrationen noch relativ hoch sind und außerdem zur Entfaltung der antibakteriellen Wirkung die Silberionen noch reduziert werden müssen.

Somit liegt der Erfindung u.a. das technische Problem zugrunde, mikrobiozide Verbindungen bereitzustellen, die die vorstehend erwähnten Nachteile nicht aufweisen.

Die Lösung dieses technischen Problems wurde durch die Bereitstellung der in den Patentansprüchen gekennzeichneten Ausführungsformen erreicht.

Bei den zu der vorliegenden Erfindung führenden Untersuchungen zeigte sich, dass sich Kern-Schale-Nanopartikel mit dendritischer Architektur sehr gut zur Einlagerung und zum Transport von Ag(I)-Ionen eignen.

In einer bevorzugten Ausführungsform können die Ag(I)-Ionen auch in Gemischen mit höhervalenten Metallionen vorliegen. Ein bevorzugtes monovalentes Metallion ist Ag⁺, bevorzugte höhervalente Metallionen sind Cu²⁺, Ru³⁺.

Im Gegensatz zu den im Stand der Technik beschriebenen Ag⁰-Nanopartikeln basieren die erfindungsgemäßen Systeme auf einfachen Komplexen zwischen Ag(I)-Ionen und Kern-Schale bzw. Doppelkern-Schale-Polymeren und müssen nicht reduziert werden, um antibakterielle Wirkung zu entfalten. Außerdem wird durch die erfindungsgemäßen Silber(I)-Nanokomplexe überraschenderweise bereits bei sehr geringen Konzentrationen eine äußerst hohe mikrobiozide Wirkung erreicht. Durch Kombination von Ag⁰ und Silber(I) kann ein System, welches kurzfristig sehr effizient die Bakterien abtötet und zusätzlich eine Depotwirkung entfaltet, hergestellt werden.

### Legenden zu den Abbildungen

Abbildung 1: Funktionalisierung von dendritischen Polymeren führt zu Kern-Schale (KS) oder Doppelkern-Schale (DKS) Architekturen, welche für die Einlagerung bzw. Komplexierung von Silberionen verwendet werden können.

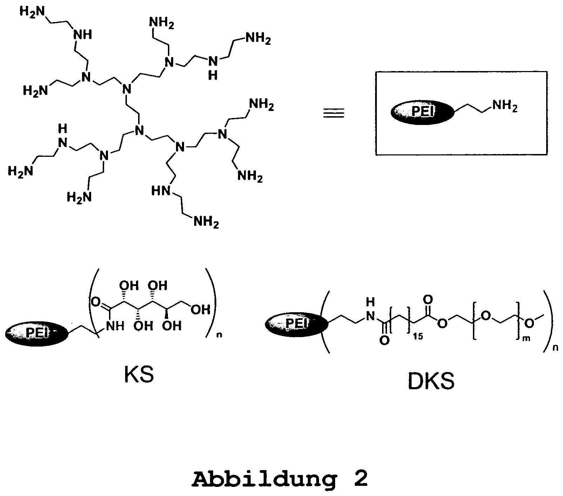

Abbildung 2: Ausschnitt einer Kern-Schale (KS) Struktur, hier PEI-Glucolacton, und (DKS) Doppelkern-Schale Struktur Funktionalisierung von PEI, PEI bildet den Kern, Glucolacton die Schale bzw. C₁₈-Disäure-PEG-Ester.
Abbildung 3: Biozide Wirkung verschiedener Silbersysteme
   E. coli mit 10⁶ Zellen pro Ansatz; Konzentration des Polymers (unverdünnt) = 5 x 10⁻⁴ mol/l, Konzentration Ag(I) = 5 x 10⁻³ mol/l (1:10), 2.5 x 10⁻³ (1:5) und 7.5 x 10⁻³ mol/l (1:15 Verhältnis).
Abbildung 4: Mit Aspergillus niger inkubierte Platten;
   links: KS-System, Verhältnis Ag⁺:Polymer = 15:1, Konzentration Polymer = 5*10⁻⁴ mol/l, [Ag⁺] = 75*10⁻⁴ mol/l (809,3 mg/l) ; rechts: DKS-System, Verhältnis Ag⁺:Polymer = 10:1, Konzentration Polymer = 5*10⁻⁴ mol/l, [Ag⁺] = 50*10⁻⁴ mol/l (539,5 mg/l)
Abbildung 5: Testung der Langzeitstabilität und -aktivität von mit Silberionen beladenen Kern-Multischalen Nanotransportern DKS-System, Verhältnis Ag⁺: Polymer = 10:1, Konzentration Polymer = 5*10⁻⁴ mol/l, [Ag⁺] = 5*10⁻³ mol/l (539,5 mg/l), E. coli (RRI) 10⁷ /ml
Abbildung 6: Fungizide Eigenschaften von mit Silberionen beladenen Kern-Multischalen Nanotransportern
   DKS-System, Verhältnis Ag⁺:Polymer = 10:1, Konzentration Polymer = 5*10⁻⁵ mol/l, [Ag⁺] = 1*10⁻³ mol/l (539,5 mg/l)
Abbildung 7: Antibakterielle Aktivitäten gegen Staphylococcus aureus DSM 346

Somit betrifft die vorliegende Erfindung die Verwendung eines Nanopartikels mit einer Kern-Schale oder Doppelkern-Schale-Struktur zur nicht-kovalenten Einlagerung und/oder zum Transport von monovalenten Metallionen, vorzugsweise Ag⁺-Ionen, wobei das Nanopartikel einen dendritischen Kern und mindestens eine Schale umfasst. Der Fachmann kann solche Nanopartikel gemäß Routineverfahren synthetisieren und mit monovalenten Metallionen beladen. Die Nanopartikel werden üblicherweise durch kovalente Modifikation von dendritischen Makromolekülen mit einer geeigneten Hülle gebildet, wobei stabile Strukturen vom Micellen-Typ entstehen (Haag, Angew. Chem. 116 (2004), 280-4; Haag, Angew. Chem. Int. Ed. 43 (2004), 278-82). Solche molekularen Architekturen sind zur nicht-kovalenten Verkapselung von Gastmolekülen geeignet, die ionisch oder auch molekularer Natur entsprechen können. Erst kürzlich wurde ein einfaches und allgemein anwendbares Konzept zur Herstellung solcher Nanopartikel vom Kern-Schale-Typ beschrieben, wobei allgemein erhältliche Ausgangmaterialien verwendet werden können (WO 2006/018295; Krämer et al., Macromolecules 38 (2005), 8308-15; Radowski et al., Angew. Chem. 119 (2007), 1287-92). Grundsätzlich werden zwei Arten dieser Kern-Schale-Nanopartikel unterschieden, Partikel mit einer Schale (KS NP) und Partikel mit mehreren Schalen (DKS NP), wobei die Schalen an einen dendritischen Kern, z.B. einen Polyamin-Kern, angefügt sind. Obwohl sich beide Arten von Nanopartikeln in ihrer Struktur unterscheiden, weisen sie ähnliche Größen auf und zeigen beide eine starke Affinität zu einer breiten Palette von Gastmolekülen.

Wie bereits vorstehend erwähnt, können dendritische Kerne unter Verwendung von bestimmten dendritischen Polymeren nach Routineverfahren erzeugt werden (Haag, Angew. Chem. 119 (2007) 1287-1292; Haag, Angew. Chem. 114 (2002), 4426-31; WO 02/077037; WO 03/037383 and US 2002/0187199). Die Herstellung von Nanopartikeln mit dendritischen Polymeren als Stabilisator wurde ebenfalls beschrieben (WO 2006/018295); siehe auch Beispiel 1, unten. Vorzugsweise werden die Nanopartikel durch die Zusammenfügung von Modulen erzeugt, wobei von preiswerten, im Handel erhältlichen Bausteinen ausgegangen werden kann. Bevorzugte Polymere für den dendritischen Kern sind Polyglycerin, Polyamid, Polyamin, Polyether oder Polyester. Diese Polymere können innerhalb ihrer dendritischen Architektur auch weiter modifiziert werden. Ein für den Kern besonders bevorzugtes Polymer ist hyperverzweigtes Polyethylenimin (PEI).

Die hyperverzweigten Kerne können mit linearen amphiphilen Bausteinen (z.B. Alkylsäuren, z.B. C₆, C₁₂ oder C₁₈, die mit Polyethylenglycol-Monomethylestern, z.B. mPEG mit durchschnittlich 6, 10 oder 14 Glycoleinheiten verknüpft sind) funktionalisiert sein.

Bei mehrschaligen Nanopartikeln besteht die innere Schale vorzugsweise aus langkettigen oder cyclischen Alkylketten mit einer Kohlenstofflänge von C₂-C₄₀, besonders bevorzugt mit einer Kohlenstofflänge von C₁₂-C₄₀, aromatischen Ringen oder Steroiden. Unpolare Verbindungen können eingesetzt werden, um einen Polaritätsgradienten zu erzeugen. Die äußere Schale ist bevorzugt hydrophil, d.h., besteht aus wasserlöslichen Einheiten und kann funktionelle Gruppen enthalten. Die funktionellen Gruppen sind vorzugsweise Hydroxy- oder Alkoxygruppen, besonders bevorzugt sind Amine oder Thiole. Besonders bevorzugt ist eine (äußere) Schale aus Glucolacton.

Die Schale(n) und der Kern können direkt oder über einen Linker verknüpft sein. Beispiele für geeignete Linker sind Ester-, Amid-, Acetal-, Imin-, Disulfid- oder Hydrazongruppen.

Die Beladung der Nanopartikel mit Ag(I)-Ionen kann ebenfalls gemäß Routineverfahren durchgeführt werden; siehe dazu auch Beispiel 1, unten. Für die Einlagerung der Metallionen ist eine Funktionalisierung der linearen und terminalen Einheiten der dendritischen Polymere unter 100% ausreichend, wobei ein bevorzugter Funktionalisierungsgrad zwischen 50% und 100% liegt, ganz bevorzugt zwischen 70% und 100%.

Das molare Verhältnis zwischen dem Polymer des Nanopartikels und den eingelagerten Metallionen ist nicht kritisch und kann z.B. zwischen 1:1 und 1:200 liegen. Bevorzugt ist ein molares Verhältnis von 1:5 bis 1:100, insbesondere von 1:10 bis 1:100.
Das Ag⁰:Ag⁺ - Verhältnis beträgt 0 - 100 %, vorzugsweise ≥ 50 %, Ag⁺
Das Ag⁺:Polymer - Verhältnis beträgt 1:1 bis 50:1, vorzugsweise größer 5:1.

Für die Zwecke der vorliegenden Erfindung können die Nanopartikel unimolekular sein oder in Form definierter Aggregate vorliegen. Die Größe der Nanopartikel ist nicht kritisch, sollte aber an den jeweiligen Verwendungszweck angepasst werden. So ist bei innerer Verabreichung zu beachten, dass die Partikel einerseits von der Niere ausgeschieden und andererseits im Zielgewebe akkumuliert werden können. Nanopartikel, die größer sind als 5 nm, können biologische Barrieren im Vergleich zu kleineren Molekülen über andere Mechanismen passieren und damit die Spezifität von Metallionen für bestimmtes Gewebe verbessern.

Vorzugsweise liegt das durchschnittliche Molekulargewicht des Nanopartikels zwischen 10.000 und 80.000 und/oder der durchschnittliche Durchmesser des Nanopartikels zwischen 2 und 20, vorzugsweise zwischen 3 und 7 nm. Diese Größe ist zur Komplexierung bzw. Einlagerung von monovalenten Metallionen und somit zu deren Transport besonders vorteilhaft.

Die vorliegende Erfindung betrifft auch die vorstehend beschriebenen Nanopartikel, die Ag⁺-Ionen in nicht-kovalenter, verkapselter Form tragen sowie eine mikrobiozide Zusammensetzung bzw. ein Arzneimittel, die (das) solche Nanopartikel enthalten. Das Arzneimittel enthält vorzugsweise außerdem noch einen pharmazeutisch verträglichen Träger. Geeignete Träger und die Formulierung derartiger Arzneimittel sind dem Fachmann bekannt. Zu geeigneten Trägern zählen beispielsweise Phosphat-gepufferte Kochsalzlösungen, Wasser, Emulsionen, beispielsweise Öl/Wasser-Emulsionen, Netzmittel, sterile Lösungen etc. Die Verabreichung der Arzneimittel kann oral oder parenteral erfolgen. Zu den Verfahren für die parenterale Verabreichung gehören die topische, intraarterielle, intramuskuläre, subkutane, intramedulläre, intrathekale, intraventrikuläre, intravenöse, intraperitoneale oder intranasale Verabreichung. Die geeignete Dosierung wird von dem behandelnden Arzt bestimmt und hängt von verschiedenen Faktoren ab, beispielsweise von dem Alter, dem Geschlecht, dem Gewicht des Patienten, der Art und dem Stadium einer Erkrankung, z.B. einer bakteriellen Infektion oder mit einer solchen Infektion einhergehenden Erkrankung, der Art der Verabreichung etc..

Schließlich betrifft die vorliegende Erfindung auch verschiedene Verwendungen eines Nanopartikels wie vorstehend definiert, z.B.:
(a) zur Trinkwasserentkeimung; oder
(b) zur Herstellung eines Arzneimittels zur Verhinderung oder Behandlung von Infektionen. Dazu können, z.B., die Nanopartikel in einer antiseptischen Wundauflage enthalten sein.

Weitere mögliche Verwendungen eines erfindungsgemäßen Nanopartikels sind z.B. die Schimmelentfernung von damit befallenen Tapeten. Sie können durch aufgesprühte KS/DKS-Nano-Ag(I)/Wasserlösung benetzt werden und so der Schimmel schnell zerstört werden. Durch enthaltene teilweise reduzierte Ag⁰ - Nanopartikel kann ein zusätzlicher Langzeitschutz erreicht werden.

Erfindungsgemäß soll unter "Schimmel" ein Pilzbefall durch jeglichen Fungus verstanden werden , nicht nur durch die Spezies Aspergillus.

Möglich ist auch die Einlagerung von KS/DKS-Nano-Ag(I) in Silikonwerkstoffe. Auch hier kann die häufig auftretende Schimmelbildung vermieden werden. Ebenfalls kann durch teilweise Ausreduzierung des Silbers eine zusätzliche Depotwirkung erzielt werden.

Weiter sei die Einlagerung von KS/DKS-Nano-Ag(I) in Zement für Verfugungen, in denen sich häufig Schimmel bildet (z. B. Verfugungen in Schwimmbädern, Duschen), erwähnt.

Möglich ist auch eine Einlagerung der Nanopartikel in Zeolite und Keramiken, um auch eine Langzeitdosierung der Systeme zu ermöglichen.

Weiter können durch Einlagerung von KS/DKS-Nano-Ag(I) in Lacksysteme keimabtötende Beschichtungen auf praktisch allen Werkstoffen aufgebracht werden. Durch Ag⁰ - Nanopartikel ist auch hier eine zusätzliche Depotwirkung möglich. Anwendungen: Spielzeug, Antifouling-Lacke, Keimfreihaltung von allen sanitären Einrichtungen (insbesondere in öffentlichen Einrichtungen), Holzlackierungen gegen Bakterien, Pilze, Schimmel.

Durch Einlagerung in Cremes, Seifen (z. B. für Körperpflege, Kosmetika) kann insbesondere durch die DKS-Variante ein Eindringen in die Haut gezielt vermieden werden.

Durch Einlagerung in Polymere können bakterizide Kunststoffe und Harze hergestellt werden. Anwendungen: Verpackungen, Zahnbürsten, Spielzeug, Handgriffe, Toilettenbrillen, Klobürsten, Küchengeräte.

KS/DKS-Nano-Ag(I) kann in Verbands- und Textilgewebe u.ä. Gewebe infiltriert werden, wobei auch hier eine Mischung mit Ag⁰ - Nanopartikel eine Depotwirkung erlaubt.

Die KS/DKS-Nano-Ag(I)-Partikel können auch in Gummis eingelagert werden. Mögliche Anwendungen für diese modifizierten Gummis sind: Wischerblätter, Kaugummi, Dichtungen.

Erwähnt seien noch:
- Einlagerung in Hydrogele und quellbare Polymernetzwerke
- Einlagerung in Filter- und Membranmaterialien
- Einlagerung in Kleb- und Füllstoffe
- Einlagerung in Öl/Wasser Emulsionen

Für alle die vorgenannten Anwendungen ist vorteilhaft, dass die Nanopartikel auch nach langer Zeit noch ihre bakterizide bzw. fungizide Wirkung aufweisen, d.h. eine Langzeit- und/oder Depotwirkung zeigen.

Die Erfindung wird durch die nachfolgenden Beispiele erläutert.

### Beispiel 1

### Synthese der Kern-Schale Architekturen und Komplexierung mit Silberionen

### (A) Synthese von PEI-Glucolacton (KS System)

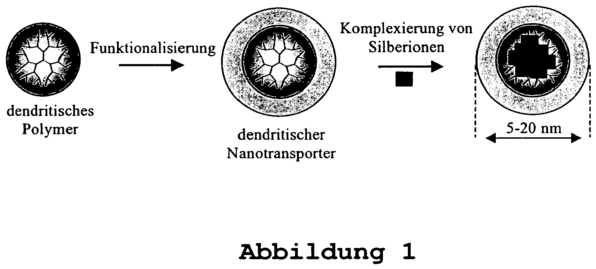

Bei den hier verwendeten Polymeren handelt es sich um hyperverzweigte (dendritische) Polymere, die auch für die Stabilisierung von Metallnanopartikeln (Metall°) eingesetzt werden können (Abbildung 1). Diese sogenannten Kern-Schale Strukturen können durch Funktionalisierung von dendritischen Polymeren, hier PEI mit Glucolacton, wie in der Literatur beschrieben erhalten werden (Krämer et al., Macromolecules 38 (2005), 8308-15). Für die erfindungsgemäßen Zwecke diente als Ausgangsprodukt das großtechnisch hergestellte PEI (Polyethylenimin), das für zahlreiche Anwendungen im Alltagsbereich bereits eingesetzt wird.

### (B) Synthese von DKS System

Bei den hier für das DKS System verwendeten Polymeren handelt es sich analog zu dem KS System um hyperverzweigte (dendritische) Polymere, die auch für die Stabilisierung von Metallnanopartikeln (Metall°) eingesetzt werden können. Die Synthese erfolgt wie in der Literatur beschrieben (Radowski et al., Angew. Chem. 119 (2007), 1287-92). Für die erfindungsgemäßen Zwecke diente als Ausgangsprodukt das großtechnisch hergestellte PEI (Polyethylenimin) und kommerziell erhältliches PEG und Oktadekandisäure.

### (C) Herstellung der Ag⁺/Polymerkomplexe

Eine 10⁻² bis 10⁻⁸ molare Polymerlösung, vorzugsweise in einem Konzentrationsbereich von 10⁻³ bis 10⁻⁶ mol/l, wird mit einer entsprechend konzentrierten Silbersalzlösung versetzt. Die molaren Verhältnisse liegen zwischen 1:1 bis 200:1 (Ag⁺:Polymer), vorzugsweise zwischen 10:1 bis 100:1.

### Beispiel 2

### Experimentelle Ergebnisse zur bakteriziden Wirkung an E. coli - Vergleich KS-System mit AgNO₃

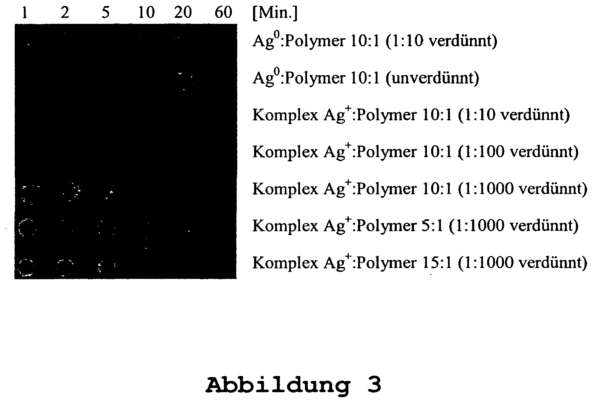

Es wurden Suspensionskulturen von E. coli mit einer Konzentration von 10⁶ Zellen pro ml in 1 ml der jeweiligen Testlösungen, bestehend aus Silberionen, beaufschlagt und nach 18 h bei 37°C auf ihre mikrobielle Wirkung geprüft (Bakterienwachstum; vergl. Abbildung 3, Tabelle 1). Untersucht wurden folgende Lösungen:
1. Ag⁺-Ionen, komplexiert mit Kern-Schale-Architekturen (10⁻⁴ mol/l)
2. Ag⁺-Ionen aus AgNO₃ (0,001 - 10 mg/l)
3. Ag⁰-Nanopartikel, stabilisiert mit Kern-Schale-Polymeren

Dabei ergab sich überraschenderweise, dass durch eine um mehrere Größenordnungen kleinere Ag⁺-Ionenkonzentration eine wesentlich höhere mikrobiozide Wirkung bei Verwendung von Ag⁺-Kern-Schale-Systemen bobachtet werden konnte. Das widerspricht der gängigen Auffassung, dass durch viel Ag⁺-Ionen eine hohe mikrobiozide Wirkung erzielt wird. Diese Ergebnisse zeigen, dass die mikrobiozide Wirkung nicht von der Konzentration der Ag⁺-Ionen abhängig ist, sondern von dem Komplex der Ag⁺-Ionen mit dem Kern-Schale-System. Der Wirkungsmechanismus legt eine Wechselwirkung der Kern-Schale-Architekturen mit der Mikroorganismus-Oberfläche nahe.

In weiteren Versuchen wurde deshalb geprüft, inwieweit das verwendete Kern-Schale-Polymer die mikrobiozide Wirkung ausgelöst hat. Es konnte gezeigt werden, dass das Polymer in unterschiedlichen Verdünnungen keine merkliche biozide Wirkung hat und damit die festgestellte Wirkung nur durch den Komplex des Kern-Schale-Polymers mit den Ag⁺-Ionenkern hervorgerufen wird (Tabelle 1). Die Reproduzierbarkeit wurde ebenfalls nachgewiesen.

**Tabelle 1. Ergebnisse mikrobiozider Versuche mit E. coli, 10⁶ Zellen pro Ansatz.**

| Untersuchte Probe | Anteil lebender Bakterien (%) nach | | | | | |
|---|---|---|---|---|---|---|
| | 1 Min. | 2 Min. | 5 Min. | 10 Min. | 20 Min. | 60 Min. |
| AgNO₃ (Ag⁺ mit 0.001 mg/l) | 100 | 100 | 100 | 100 | 100 | 100 |
| AgNO₃ (Ag⁺ mit 0.01 mg/l) | 100 | 100 | 100 | 100 | 100 | 100 |
| AgNO₃ (Ag⁺ mit 0.1 mg/l) | 100 | 100 | 100 | 100 | 100 | 100 |
| AgNO₃ (Ag⁺ mit 1 mg/l) | 100 | 100 | 100 | 100 | 100 | 100 |
| AgNO₃ (Ag⁺ mit 10 mg/l) | 100 | 100 | 100 | 100 | 100 | 100 |
| Polymer (1:100 verdünnt) | 100 | 100 | 100 | 100 | 100 | 100 |
| Polymer (1:1000 verdünnt) | 100 | 100 | 100 | 100 | 100 | 100 |
| Polymer (1:10,000 verdünnt) | 100 | 100 | 100 | 100 | 100 | 100 |
| Polymer (1:100,000 verdünnt) | 100 | 100 | 100 | 100 | 100 | 100 |
| Polymer (1:100,000 verdünnt) | 100 | 100 | 100 | 100 | 100 | 100 |
| Ag⁰:Polymer 10:1 (1:10 verdünnt) | 100 | 100 | 100 | 100 | 100 | 90 |
| Ag⁰:Polymer 10:1 (unverdünnt) | 100 | 90 | 80 | 70 | 40 | 5 |
| Ag⁺:Polymer 10:1 (1:10 verdünnt) | 0 | 0 | 0 | 0 | 0 | 0 |
| Ag⁺:Polymer 10:1 (1:100 verdünnt) | 0 | 0 | 0 | 0 | 0 | 0 |
| Ag⁺:Polymer 10:1 (1:1000 verdünnt) | 80 | 50 | 20 | 0 | 0 | 0 |
| Ag⁺:Polymer 5:1 (1:1000 verdünnt) | 100 | 100 | 100 | 85 | 70 | 0 |
| Ag⁺:Polymer 15:1 (1:1000 verdünnt) | 100 | 100 | 70 | 5 | 0 | 0 |

Alle Versuchsreihen wurden mit reinem Wasser als Blindprobe verglichen, wobei hier kein Absterben der Kulturen beobachtet werden konnte.

In einer weiteren Versuchsreihe wurden Ag⁰-Nanopartikel mit den Komplexen der Ag⁺-Ionen mit den Kern-Schale-Systemen verglichen. Dabei zeigte sich, dass das Ag⁺-Kern-Schale-System den Ag⁰-Nanopartikeln in der bioziden Wirkung weit überlegen ist (Abbildung 3, Tabelle 1) . Komplexe von Ag⁺-Ionen mit dem Kern-Schale-System sind noch bis zu einer Verdünnung von 1:1000 für die Stammlösung mit 10⁻⁴ mol/l wirksam (Suspensionskultur von E-Coli: 10⁶ ml/l). Die Grösse der Ag⁰-Nanoteilchen lag bei ca. 2 - 20 nm.

Überraschenderweise sind von allen drei untersuchten Silbersystemen (AgNO₃, Ag⁰-Polymerkomplexe, Ag⁺-Polymerkomplexe) der Komplex Ag⁺-Ionen mit den Kern-Schale-Polymeren am effizientesten und noch bei sehr geringen Konzentrationen wirksam.

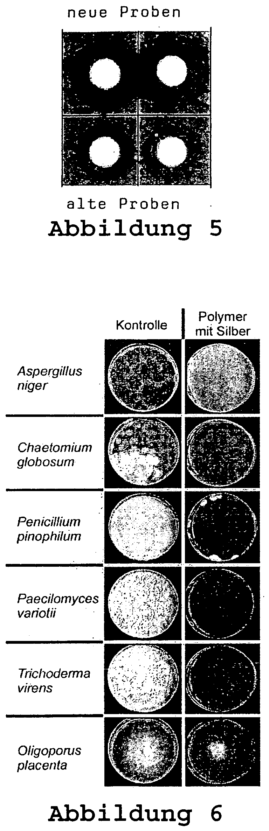

Desweiteren wurde die Langzeitstabilität und -Aktivität der mit Silberionen beladenen Kern-Multischalen Nanotransportern nach einem Jahr bestimmt. Konzentration des Polymers: 5 × 10⁻⁴ **M;** Silberkonzentration: 5 x 10⁻³ **M;** Bacterium: E. coli (RRI), 10⁷ / ml; 10 µl of Polymer/Silbermischung wurde auf Whatman 3MM (5 mm ∅) Papier verwendet. Die Ergebnisse sind in Abbildung 5 zu sehen. Auch nach einem Jahr Aufbewahrungszeit haben die Nanotransporter nur wenig von ihrer bakteriziden Wirkung eingebüßt.

### Experimentelle Ergebnisse zur bakteriziden Wirkung an E. coli - Vergleich KS-System mit DKS-System

Das DKS-System wurde mit dem KS-System verglichen und zeigte eine vergleichbare antimikrobielle Wirkung (Ergebnisse nicht gezeigt). Auch hier zeigte die 1:1000 Verdünnung einer Polymerlösung von 5*10⁻⁴ mol/l eine ausreichende antimikrobielle Wirkung innerhalb von 10 bis 20 Minuten, wobei sich die Wirkung mit steigendem Verhältnis von Ag⁺:Polymer analog zu den KS-Systemen verbesserte. Polymere mit einem höheren Molekulargewicht waren etwas besser geeignet im Vergleich zu denen mit niedrigerem Molekulargewicht. Das Polymer zeigte bereits bei 10⁻³ mol/l eine geringe antimikrobielle Wirkung.

### Beispiel 3

### Experimentelle Ergebnisse zur fungiziden Wirkung

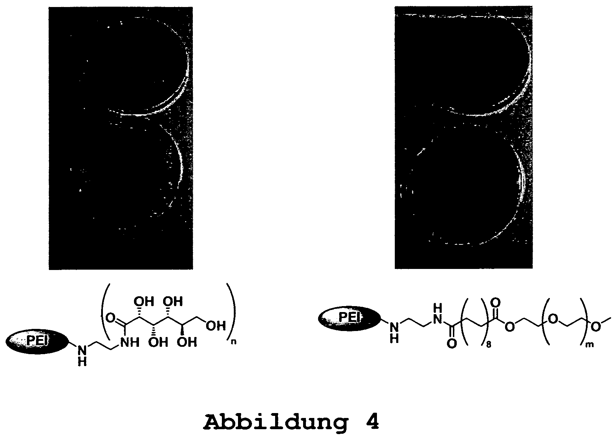

Um die Wirkung auch an Schimmelpilzen zu testen, wurde Aspergillus niger auf Platten mit jeweils einem KS und DKS-System und Silberverbindungen inkubiert (Abbildung 4). Sowohl das KSals auch das DKS-System hemmen das Wachstum von A. niger, wenn sie in der geringsten Verdünnung (10⁻⁵ mol/l) eingesetzt werden.

Weiter wurden die fungiziden Eigenschaften von mit Silberionen beladenen Kern-Multischalen Nanotransportern nach 28 Tagen an mehreren verschiedenen Pilzkulturen untersucht: Aspergillus niger, Chaetomium globosum, Penicillium pinophilum, Paecilomyces variotii, Trichoderma virenis DSM 1963, Oligoporus placenta. Konzentration des Polymers: 5 x 10⁻⁵ **M;** Silberkonzentration: 1 × 10⁻³ **M.** Die Ergebnisse sind in Abbildung 6 zu sehen. Daraus ergibt sich eine anti-fungizide Wirkung über ein breites Erregerspektrum.

### Beispiel 4

### Antibakterielle Aktivität gegen Staphylococcus aureus DSM 346

Es wurden Über-Nachtkulturen in Flüssigmedium angesetzt und über die bekannte Extinktion die Keimzahl von 10 ⁸ Keime/ml eingestellt: Staphylococcus aureus E₆₂₃ = 0,306
Dann wurden davon je Petrischale 100 i-galskispatel ausplattiert. Anschließend wurden je Petrischale 5 Filterpads (Durchmesser 5mm) mit einer sterilen Pinzette aufgelegt und die 4 äußeren Pads wurden mit je
(s. nachfolgende Tabelle 2) unverdünnt betropft und das innere Pad zum Vergleich mit sterilem Reinstwasser benäßt. Die Bebrütung erfolgte bei 37°C.

**Tabelle 2**

| Kontrolle nach 24 Stunden: | |
|---|---|
| | Durchmesser des Hemmhofes in mm |
| TestSubstanz | Staph. Aureus |
| | 24 h |
| 1=AgNO₃-7,5x10⁻³M | 10/10/11/10 |
| (1:15) | |
| 2= AgNO₃-5x10⁻³M | 10/11/11/10 |
| (1:10) | |
| 3= AgNO₃-5x10⁻³M | 8/10/10/8 |
| (1:10) | |
| 550/18/5000/70-5x10⁻⁴M | |
| 4= AgNO₃-7,5x10⁻³M | 11/10/8/10 |
| (1:15) | |
| 550/18/5000/70-5x10⁻⁴M | |

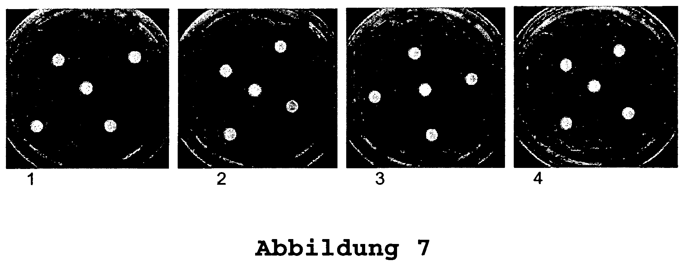

Die Ergebnisse sind in Abbildung 7 gezeigt.

## Patentansprüche

1. Nicht therapeutische Verwendung eines Nanopartikels mit einer Kern-Schale- oder Doppelkern-Schale-Struktur, wobei das Nanopartikel einen dendritischen Kern und mindestens eine Schale umfasst und wobei Ag⁺-Ionen nicht-kovalent in das Nanopartikel eingelagert sind, als mikrobiozide Verbindung.

2. Verwendung nach Anspruch 1, wobei die Ag⁺-Ionen in einem Gemisch mit höhervalenten Metallionen vorliegen.

3. Verwendung nach Anspruch 1 oder 2, wobei das Nanopartikel eine oder zwei Schalen umfasst.

4. Verwendung nach einem der Ansprüche 1 bis 3, wobei der dendritische Kern hyperverzweigtes Polyethylenimin (PEI) umfasst.

5. Verwendung nach einem der Ansprüche 1 bis 4, wobei die (äußere) Schale Glucolacton umfasst.

6. Verwendung nach einem der Ansprüche 1 bis 5, wobei die Nanopartikel ein molares Verhältnis von Ag⁺:Polymer zwischen 1:1 und 200:1 haben.

7. Verwendung nach einem der Ansprüche 1 bis 6, wobei das durchschnittliche Molekulargewicht des Nanopartikels zwischen 10.000 und 80.000 g/mol liegt.

8. Verwendung nach einem der Ansprüche 1 bis 7, wobei der durchschnittliche Durchmesser des Nanopartikels zwischen 2 und 20 nm liegt.

9. Verwendung nach einem der Ansprüche 1 bis 8, wobei das Nanopartikel zusätzlich Ag⁰ aufweist.

10. Verwendung eines Nanopartikels wie in einem der Ansprüche 1 bis 8 definiert zur Trinkwasserentkeimung.

11. Verwendung eines Nanopartikels wie in einem der Ansprüche 1 bis 8 definiert zur Herstellung eines Arzneimittels zur Verhinderung oder Behandlung von Infektionen.

12. Verwendung nach Anspruch 11, wobei das Nanopartikel in einer antiseptischen Wundauflage enthalten ist.

13. Verwendung eines Nanopartikels wie in einem der Ansprüche 1 bis 8 definiert für die fungizide oder bakterizide Ausstattung und/oder Imprägnierung von Stoffen.

## Claims

1. Non-therapeutic use of a nanoparticle with a core-shell or double core-shell structure, wherein the nanoparticle comprises a dendritic core and at least one shell, and wherein Ag⁺ ions are non-covalently incorporated into the nanoparticle, as microbiocidal compound.

2. Use according to claim 1, wherein the Ag⁺ ions are present in a mixture with higher-valency metal ions.

3. Use according to claim 1 or 2, wherein the nanoparticle comprises one or two shells.

4. Use according to any of claims 1 to 3, wherein the dendritic core comprises hyperbranched polyethylene imine (PEI).

5. Use according to any of claims 1 to 4, wherein the (outer) shell comprises gluconolactone.

6. Use according to any of claims 1 to 5, wherein the nanoparticles have a molar ratio of Ag⁺: polymer between 1:1 and 200:1.

7. Use according to any of claims 1 to 6, wherein the average molecular weight of the nanoparticle lies between 10,000 and 80,000 g/mol.

8. Use according to any of claims 1 to 7, wherein the average diameter of the nanoparticle lies between 2 and 20 nm.

9. Use according to any of claims 1 to 8, wherein the nanoparticles additionally includes Ag⁰.

10. Use of a nanoparticle as defined in any of claims 1 to 8 for drinking water sterilization.

11. Use of a nanoparticle as defined in any of claims 1 to 8 for preparing a drug for the prevention or treatment of infections.

12. Use according to claim 11, wherein the nanoparticle is contained in an antiseptic wound dressing.

13. Use of a nanoparticle as defined in any of claims 1 to 8 for the fungicidal or bactericidal finish and/or impregnation of fabrics.

## Revendications

1. Utilisation non thérapeutique d'une nanoparticule ayant une structure noyau-enveloppe ou noyau-enveloppe double, où la nanoparticule comprend un noyau dendritique et au moins une enveloppe et où des ions Ag⁺ sont incorporés de manière non covalente dans la nanoparticule, comme composé microbiocide.

2. Utilisation selon la revendication 1 où les ions Ag⁺ sont présents dans un mélange avec des ions métalliques de plus haute valence.

3. Utilisation selon la revendication 1 ou 2 où la nanoparticule comprend une ou deux enveloppes.

4. Utilisation selon l'une des revendications 1 à 3 où le noyau dendritique comprend de la polyéthylèneimine (PEI) hyper-ramifiée.

5. Utilisation selon l'une des revendications 1 à 4 où l'enveloppe (externe) comprend de la gluconolactone.

6. Utilisation selon l'une des revendications 1 à 5 où les nanoparticules ont un rapport molaire Ag⁺:polymère entre 1:1 et 200:1.

7. Utilisation selon l'une des revendications 1 à 6 où la masse moléculaire moyenne de la nanoparticule est située entre 10000 et 80000 g/mol.

8. Utilisation selon l'une des revendications 1 à 7 où le diamètre moyen de la nanoparticule est situé entre 2 et 20 nm.

9. Utilisation selon l'une des revendications 1 à 8 où la nanoparticule comporte en outre Ag⁰.

10. Utilisation d'une nanoparticule comme défini dans l'une des revendications 1 à 8 pour la stérilisation de l'eau potable.

11. Utilisation d'une nanoparticule comme défini dans l'une des revendications 1 à 8 pour la fabrication d'un médicament pour empêcher ou traiter des infections.

12. Utilisation selon la revendication 11 où la nanoparticule est contenue dans un pansement antiseptique.

13. Utilisation d'une nanoparticule comme défini dans l'une des revendications 1 à 8 pour le garnissage fongicide ou bactéricide et/ou l'imprégnation de substances.
